# EUROPÄISCHE PATENTSCHRIFT

(11) **EP 3 808 531 B1**
(45) Veröffentlichungstag und Bekanntmachung des Hinweises auf die Patenterteilung: **13.09.2023**
(21) Anmeldenummer: 20202281.0
(22) Anmeldetag: 16.10.2020
(51) Int. Cl.: B29C 45/28, B29C 45/76, B29C 45/77, B29C 45/78, B29C 45/27

(54) **VERFAHREN ZUM BETRIEB EINER NADELVERSCHLUSSDÜSE**
METHOD OF OPERATING A NEEDLE VALVE NOZZLE
PROCÉDÉ DE CONDUITE D'UNE BUSE DE VANNE À POINTEAU

(30) Priorität: 16.10.2019 DE 102019127988
(43) Veröffentlichungstag der Anmeldung: 21.04.2021
(60) Teilanmeldung: 23189458.5
(73) Patentinhaber: Günther Heisskanaltechnik GmbH, 35066 Frankenberg (DE)
(72) Erfinder: Günther, Herbert, 35108 Allendorf (DE); Sommer, Siegrid, 35099 Burgwald (DE); Schnell, Torsten, 35104 Lichtenfels (DE)
(74) Vertreter: Patentanwälte Olbricht Buchhold Keulertz

(56) Entgegenhaltungen:
- EP-A2- 2 926 971
- WO-A1-2014/150632
- DE-A1-102015 121 454
- DE-A1-102016 003 970
- US-A1- 2014 210 119
- KAZMER D ET AL: "MULTI-CAVITY PRESSURE CONTROL IN THE FILLING AND PACKING STAGES OF THE INJECTION MOLDING PROCESS", POLYMER ENGINEERING AND SCIENCE, BROOKFIELD CENTER, US, Bd. 37, Nr. 11, 1. November 1997 (1997-11-01), Seiten 1865-1879, XP000776243, ISSN: 0032-3888, DOI: 10.1002/PEN.11837
- Synventive Molding Solutions: "SynFlow(R)", , 22. Mai 2013 (2013-05-22), XP055816373, youtube.com Gefunden im Internet: URL:https://www.youtube.com/watch?v=Omk2dW 5Jsxk [gefunden am 2021-06-22]

## Beschreibung

Die Erfindung betrifft ein Verfahren zum Betrieb einer Nadelverschlussdüse.

Heißkanaldüsen und Spritzgießwerkzeuge sind allgemein bekannt. Sie werden üblicherweise bei der Verarbeitung von Materialien, beispielsweise thermoplastischen Materialien oder Flüssiksilikonen), mittels Spritzgusstechnik verwendet, die erst bei einer gewissen Mindesttemperatur fließfähig und somit formbar sind. Dazu ist es notwendig, die Heißkanaldüse auf diese - vom zu verarbeitenden Werkstoff abhängige - Mindesttemperatur zu bringen und dort zu halten, was üblicherweise mit Hilfe von Heizvorrichtungen geschieht. Heißkanaldüsen können als Nadelverschlussdüse ausgebildet sein, umfassend eine Verschlussnadel, welche die Nadelverschlussdüse längsverschieblich entlang eines Hubwegs durchsetzt und mittels eines Antriebs zwischen einer Öffnungs- und einer die Austrittsöffnung der Düse verschließende Schließstellung verstellbar ist.

Das fließfähige Material wird bei einer vorgebbaren Temperatur sowie unter hohem Druck einem trennbaren Werkzeugblock (Formnest) zugeführt. Hierzu sind meist an einem temperierbaren Verteilersystem mehrere - ebenfalls temperierbare - Heißkanaldüsen montiert, die das zu verarbeitende Material über einen Strömungskanal dosiert in das Formnest bzw. die Formkavität leiten. Dort bildet das Material ein mit der Formkavität korrespondierendes Produkt aus.

Die Qualität des spritzgegossenen Produktes hängt unter anderem davon ab, ob die in die Formkavität eingeleitete Füllmenge des Materials entsprechend geeignet bemessen ist, um beispielsweise Spritzgussfehler zu vermeiden. Spritzgussfehler aufgrund falscher Materialmengendosierung können beispielsweise Einfallstellen, eine unvollständige Kavitätsfüllung, Schwimmhäute oder Vakuolen sein. Es können auch weitere Qualitätskriterien herangezogen werden, um die Qualität des spritzgegossenen Produktes zu bemessen. Um diese Qualitätskriterien zu erfüllen, kann zunächst vor Produktionsbeginn eine qualitätssichernden Formkavitätsfüllmenge simulativ berechnet oder iterativ oder empirisch Ermittelt werden.

Eine Möglichkeit zur Regulierung der in die Formkavität einleitbaren Füllmenge des Materials ist eine Steuerung des Nadelhubes. Der Hubweg bzw. dessen Länge und die Hubgeschwindigkeit der Verschlussnadel können einstellbar sein. Hierzu schlägt beispielsweise die EP 3 299 140 B1 eine Steuerung einer Nadelhubgeschwindigkeit derart vor, dass je nach erfasstem Systemzustand eine als Ventilstift bezeichnete Verschlussnadel mit unterschiedlichen Geschwindigkeiten innerhalb eines Hubes verfahren wird. Dieser Ansatz erfordert jedoch erhebliche Echtzeitsensorik und entsprechende Regelungsmittel, so dass dieses Verfahren als komplex und aufwändig bezeichnet werden kann.

Die WO 2017/144344 A1 offenbart laut ihres Titels ein Verfahren zur Durchführung eines zyklischen Produktionsprozesses, wobei gemäß des allgemein gehaltenen Hauptanspruchs das Verfahren vorsieht: Ändern mindestens einer Prozesseinstellgrösse; Ermitteln für eine geänderte Prozesseinstellgrösse automatisiert mindestens eine Prozesskenngrössenvariante; Automatisches Prüfen, ob sich die ermittelte Prozesskenngrössenvariante innerhalb einer Prozessstabilitätsgrenze befindet und prozessstabil ist; Kontrollieren, ob das Qualitätsmerkmal der mit einer geänderten Prozesseinstellgrösse produzierten Güter innerhalb der Qualitätstoleranz der produzierten Güter liegt und somit Gutteile produziert worden sind; und automatisiertes Bilden einer Prozesskenngrössenzone mit mindestens einer ermittelten Prozesskenngrössenvariante, die prozessstabil ist und deren Prozesseinstellgrösse Gutteile produziert. Das Verfahren schlägt also die Ermittlung einer Prozesskenngrössenzone vor, welcher sich durch Ändern der Prozesseinstellgrössen angenähert werden soll, um ein Abdriften des Spritzgießprozesses aus einem stabilen Zustand zu verhindern. Dieser Prozess kann insbesondere aufgrund der obligatorischen Prüfung auf Prozessstabilität und dem umfangreichen Prüfverfahren zur Ausbildung der Prozesskenngrössenzone als aufwändig bezeichnet werden.

Eine Formgebungsvorrichtung zur Herstellung von Formartikeln (S) durch sequenzielles Spritzgießen gemäß DE 10 2015 121 454 A1 umfasst eine Form mit einem Hohlraum (S), eine Vielzahl elektrisch betriebener Injektoren (A, B, C, D), die jeweils an Mittel-, Zwischen- bzw. Endpositionen in Bezug auf den Formhohlraum (S) angeordnet sind, und ein elektronisches Steuerungssystem zum Steuern der Injektoren, um diese nach einem sequenziellen Zyklus zu betätigen, der zunächst für das Öffnen des Mittelinjektors (A), anschließend der Zwischeninjektoren (B, C) und dann der Endinjektoren (D) sorgt. Das elektronische Steuerungssystem ist so gestaltet, dass der Zyklus des sequenziellen Öffnens so erfolgt, dass im Formbefüllungsschritt ein linearerer und homogenerer Druck sowie ein geringerer Verdichtungsdruck erhalten werden.

Aufgabe der vorliegenden Erfindung ist es daher, ein Verfahren zum Betrieb einer Nadelverschlussdüse in einer Spritzgießvorrichtung vorzuschlagen, insbesondere ein Verfahren zur initialen Ermittlung einer qualitätssichernden Formkavitätsfüllmenge, welches in möglichst einfacher Weise eine vordefinierte Qualität eines spritzgegossenen Produktes gewährleistet.

Hauptmerkmale der Erfindung sind in Anspruch 1 angegeben. Ausgestaltungen sind Gegenstand der Ansprüche 2 bis 8. Die Aufgabe wird gelöst durch die Merkmale des unabhängigen Anspruchs. Vorteilhafte Weiterbildungen sind Gegenstand der abhängigen Ansprüche sowie der folgenden Beschreibung.

Erfindungsgemäß wird also ein Verfahren zum Betrieb einer Nadelverschlussdüse in einer Spritzgießvorrichtung vorgeschlagen, insbesondere ein Verfahren zur initialen Ermittlung einer qualitätssichernden Formkavitätsfüllmenge, wobei die Spritzgießvorrichtung umfasst:
- eine Nadelverschlussdüse mit zumindest einer Austrittsöffnung,
- zumindest eine Verschlussnadel, welche die Nadelverschlussdüse längsverschieblich entlang eines Hubweges variabler Länge durchsetzt und mittels eines Antriebs ausschließlich zwischen einer Öffnungs- und einer die Austrittsöffnung verschließende Schließstellung verstellbar ist, und
- eine Formkavität, welche fluidisch mit der Nadelverschlussdüse verbunden ist,
umfassend die folgenden Schritte:
a. Vorgeben zumindest eines Prozessparameters für die Nadelverschlussdüse, ausgewählt aus der Gruppe umfassend Nadelhubgeschwindigkeit und Nadelhubbeschleunigung;
b. Verstellen der Verschlussnadel aus ihrer Schließstellung in ihre Öffnungsstellung entsprechend des mindestens einen Prozessparameters mit einer vor der Verstellung definierten kontinuierlichen Nadelhubgeschwindigkeit;
c. Einspritzen einer Menge an fluider Masse in die Formkavität;
d. Verstellen der Verschlussnadel aus ihrer Öffnungsstellung in ihre Schließstellung entsprechend des Prozessparameters mit einer kontinuierlichen Nadelhubgeschwindigkeit;
e. Vergleichen des in der Formkavität ausgeformten Produktes und/oder von zumindest einem während des Einspritzens erfassten Prozessparameters mit zumindest einem vordefinierten Qualitätskriterium, um zu ermitteln, ob die Formkavitätsfüllmenge zu groß oder zu gering war,
f. im Fall einer zu großen eingespritzten Formkavitätsfüllmenge:
   i. Erhöhen der Nadelhubgeschwindigkeit für eine anschließende Iteration für das Verstellen der Verschlussnadel aus ihrer Schließstellung in ihre Öffnungsstellung und/oder für das Verstellen der Verschlussnadel aus ihrer Öffnungsstellung in ihre Schließstellung, und/oder
   ii. Reduzieren einer Nadelhubbeschleunigung für eine anschließende Iteration, und
   iii. Festlegen des zumindest einen wertveränderten Prozessparameters als neuer vorgegebener Prozessparameter,
g. im Fall einer zu geringen eingespritzten Formkavitätsfüllmenge
   i. Reduzieren der Nadelhubgeschwindigkeit für eine anschließende Iteration für das Verstellen der Verschlussnadel aus ihrer Schließstellung in ihre Öffnungsstellung und/oder für das Verstellen der Verschlussnadel aus ihrer Öffnungsstellung in ihre Schließstellung, und/oder
   ii. Erhöhen einer Nadelhubbeschleunigung für eine anschließende Iteration, und
   iii. Festlegen des zumindest einen wertveränderten Prozessparameters als neuer vorgegebener Prozessparameter,
h. Durchführen der Schritte a bis e und f oder g in iterativer Weise bis das Vergleichen ergibt, dass das Produkt dem vordefinierten Qualitätskriterium entspricht.

Als "Hubweg" soll die Strecke zwischen der Schließstellung und derjenigen Stellung der Verschlussnadel aufgefasst werden, in welcher sie zum Stillstand kommt, um nachfolgend in die Schließstellung verfahren zu werden (=Öffnungsstellung). Die Füllmenge der Kavität ist dann eine gewünschte Füllmenge, wenn das mindestens eine vordefinierte Qualitätskriterium erfüllt ist.

Das Erfordernis nach einem gegenüber dem bekannten Stand der Technik vereinfachten Verfahren schließt die Nutzung bisher verwendeter aufwändiger Sensorik und ggf. Echtzeitsensorik aus. Die Verschlussnadel fährt daher während eines einzigen Hubweges keine Zwischenstellung an oder verbleibt dort. Die Verschlussnadel ist vielmehr ausschließlich zwischen der Schließ- und der Öffnungsstellung verstellbar. Die Verschlussnadel bewegt sich während eines einzigen Hubweges nicht mit unterschiedlichen Geschwindigkeiten. Vielmehr wird die Verschlussnadel mit einer über den gesamten Hubweg eines Hubes konstanten Verfahrgeschwindigkeit verstellt. Das erfindungsgemäße Verfahren bedarf aufgrund der konstanten Verstellgeschwindigkeit keiner eigens dafür vorgesehenen Sensorik zur Erfassung von Verschlussnadelnpositionen. Bisher musste nämlich zu jedem Zeitpunkt die Position der Verschlussnadeln bekannt sein, um bei Vorliegen eines Kriteriums die Verfahrgeschwindigkeit der Verschlussnadeln entsprechend verändern zu können. Auch an dieser Stelle reduziert die Erfindung die bisher bekannte Verfahrenskomplexität, da die mittels Sensoren überwachte Verschlussnadelnposition als Information nicht mehr von einem Regelkreis verarbeitet werden muss.

Das erfindungsgemäße Verfahren reduziert daher in überraschend einfacher Weise die Komplexität bekannter Verfahren erheblich. Dies ist möglich, da das Verfahren auf einer iterativen Annäherung an gewünschte Prozessparameter beruht, welche eine gewünschte Produktqualität ermöglichen. Hierzu wird zunächst zumindest ein Prozessparameter als Ausgangswert vorgegeben und basierend darauf ein erster Spritzgießvorgang durchgeführt. Ein Spritzgießvorgang umfasst zumindest ein Einspritzen von Material in die Kavität, ggf. ein Nachdrücken und Abkühlen des Materials in der Kavität sowie ein Entformen des aus dem Material geformten Produkts aus der Kavität. Anschließend wird entweder das Produkt mit zumindest einem zuvor definierten Qualitätskriterium verglichen oder zumindest ein während des Einspritzens erfasster Prozessparameter mit zumindest einem zuvor definierten Qualitätskriterium verglichen oder beides. Das Produkt kann händisch oder automatisch vermessen werden, um es zu vergleichen. Das Ergebnis kann entweder lauten, dass das Qualitätskriterium erfüllt oder nicht erfüllt ist. Sofern das Qualitätskriterium erfüllt ist, liegt eine qualitätskriteriumerfüllende und somit gewünschte Füllmenge vor und das Verfahren kann beendet werden. Ist das Qualitätskriterium jedoch nicht erfüllt, so kann anhand der Art und/oder der numerischen Größe der Nichterfüllung darauf geschlossen werden, ob die eingespritzte Formkavitätsfüllmenge zu groß oder zu klein war. Davon abhängig wird/werden im Anschluss ein oder mehrere Prozessparameter (Nadelhubgeschwindigkeit oder Nadelhubbeschleunigung) entsprechend verändert und eine nachfolgende Iteration durchgeführt. Dies kann so lange erfolgen, bis gewünschte Prozessparameter für die Nadelverschlussdüse ermittelt sind.

Die Nadelhubgeschwindigkeit kann durch entsprechende Ansteuerung des Antriebs verändert werden. Gleiches gilt für die Nadelhubbeschleunigung.

Gemäß einer Weiterbildung des erfindungsgemäßen Verfahrens wird unmittelbar nach dem Verstellen der Verschlussnadel in ihre Schließstellung als Messwert ein Formkavitätsinnendruck und/oder eine Formkavitätswandtemperatur und/oder ein optisches oder mechanisches Qualitätsmerkmal erfasst. Dieser Messwert kann als numerische Beschreibung des Produktes oder Prozessparameters dienen, um den Vergleich auf einfachem Wege durchzuführen.

Es ist ferner vorgesehen, dass der erfasste Messwert in einer Datenbank gespeichert wird. Dieser Messwert kann beispielsweise genutzt werden, um einen oder mehrere Prozessparameter bei nachfolgenden Anwendungen des Verfahrens zu ermitteln, beispielsweise bei Ermittlung einer Formkavitätsfüllmenge bei vergleichbaren Formkavitäten, da das Ergebnis oder die Auswirkung eines Prozessparameters abgeschätzt werden kann und somit bereits ein Prozessparameter vorgebbar ist, der mutmaßlich bereits an den Prozessparameter angenähert ist, der mit einer geeigneten Formkavitätsfüllmenge korrespondiert.

Weiterbildungsgemäß werden die Prozessparameter in einer Datenbank gespeichert, falls das Produkt dem mindestens einen vordefinierten Qualitätskriterium entspricht. Dieser Messwert kann beispielsweise als Ausgangswert des Verfahrens genutzt werden, für den Fall, dass bei vergleichbaren Formkavitäten eine Formkavitätsfüllmenge zu ermitteln ist.

Vorgesehen ist auch, dass die Spritzgießvorrichtung zumindest eine Formkavität umfasst und jeder Formkavität zumindest eine separate Nadelverschlussdüse zugeordnet ist, wobei die Prozessparameter für jede Nadelverschlussdüse separat vorgegeben und festgelegt werden können. In vorteilhafter Weise ist das erfindungsgemäße Verfahren nämlich auch bei einer Mehrfachkavität anwendbar, also wenn mehrere Kavitäten zu füllen und mehrere Nadelverschlussdüsen einzustellen sind. Das Verfahren kann dann vorsehen, dass das Vergleichen des in der Formkavität ausgeformten Produktes und/oder von zumindest einem während des Einspritzens erfassten Prozessparameters mit zumindest einem vordefinierten Qualitätskriterium, um zu ermitteln, ob die Formkavitätsfüllmenge zu groß oder zu gering war, kavitätsbezogen erfolgt und das Ergebnis aus diesem Vergleich der der Kavität zugeordneten Nadelverschlussdüse hinsichtlich Erhöhung/Reduktion eines/mehrerer Prozessparameter zu Gute kommt.

Weiterbildungsgemäß erfolgt die Verstellung der Verschlussnadel mittels eines als Antrieb dienenden Schrittmotors oder Servomotors, welcher einen Encoder umfasst, und/oder ein Positionsabfragemittel aufweist, und/oder pneumatisch, hydraulisch oder elektrisch betreibbar ist. Das Positionsabfragemittel ist so ausgebildet, dass es Positionen der Verschlussnadel ausschließlich in deren Öffnungs- und/oder Schließstellung erfasst, nicht jedoch dazwischen.

Das Verfahren ist weiterderart ausgebildet, dass eine Echtzeitposition der Verschlussnadel nicht von einer Sensorik erfasst wird. Das erfindungsgemäße Verfahren ist nämlich auch ohne diese Daten in einfacher Weise ausführbar. Als Sensorik soll eine solche verstanden werden, welche ausschließlich oder zumindest primär der Erfassung der Position der Nadel dient. Sofern diese Daten ohnehin entstehen, beispielsweise durch einen Encoder, werden diese zumindest nicht in dem Verfahren verwendet. Die aktuelle Position der Verschlussnadel ist nämlich für das vorgeschlagene Verfahren nicht nötig.

Erfindungsgemäß sieht das Verfahren weiter vor, dass die Verschlussnadel zwischen ihrer Öffnungs- und ihrer Schließstellung nicht in dazwischenliegende Zwischenstellungen verfahren wird. Eine Zwischenstellung liegt beispielsweise dann vor, wenn sich innerhalb eines Hubes eine Verfahrgeschwindigkeit der Verschlussnadel von einer ersten Geschwindigkeit zu einer zweiten dergegenüber veränderten Geschwindigkeit ändert. Die Nadelposition, an welcher die Geschwindigkeitsänderung wirksam wird, soll als Zwischenstellungen gelten. Eine Zwischenstellungen kann auch gegeben sein, wenn die Verschlussnadel auf einem Hubweg angehalten und dann erneut in die gleiche Richtung verfahren wird.

Weitere Ausführungsbeispiele, Merkmale und Vorteile der Erfindung ergeben sich aus der nachfolgenden Beschreibung eines speziellen Ausführungsbeispiels. Es zeigen:
- Fig. 1:: eine vergrößerte Axialschnittansicht des unteren Endes einer exemplarischen Nadelverschlussdüse und

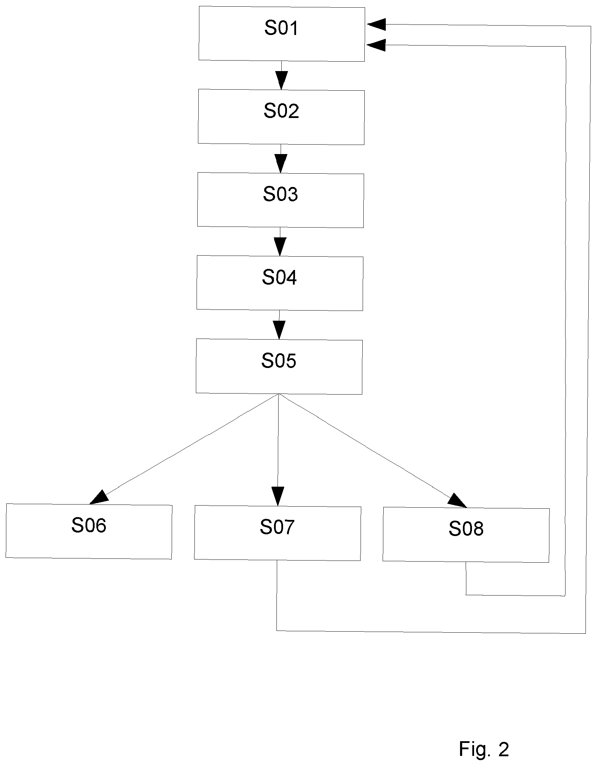

- Fig. 2:: ein Ablaufdiagramm eines erfindungsgemäßen Verfahrens.

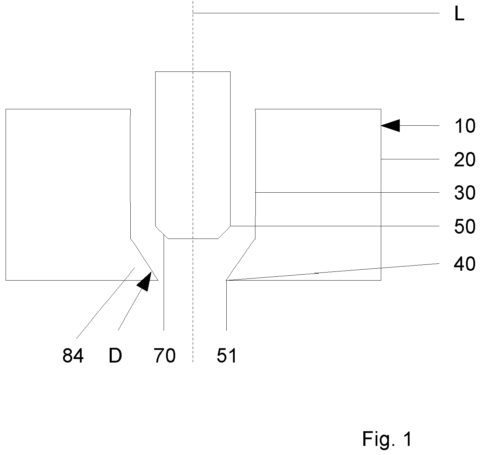

Die in Fig. 1 allgemein mit 10 bezeichnete Nadelverschlußdüse ist Bestandteil eines (nicht weiter dargestellten) Spritzgießwerkzeugs. Sie hat einen bevorzugt außenbeheizten Düsenkörper 20, in dem ein (nicht sichtbares) Materialrohr ausgebildet ist, das konzentrisch zur Längsachse L der Nadelverschlußdüse 10 einen Schmelzekanal 30 begrenzt. Über den Schmelzekanal 30 und eine Austrittsöffnung 40 ist eine zu verarbeitende Schmelze, beispielsweise eine Metall-, Silikon- oder Kunststoffschmelze, einem (nicht näher gezeigten) Formnest zuführbar. Die Formkavität ist also fluidisch mit der Nadelverschlussdüse verbunden.

Zum Öffnen und Schließen der Austrittsöffnung 40 ist eine axial verschiebbare Verschlussnadel 50 vorgesehen, die den Schmelzekanal 30 längsverschieblich durchsetzt und mittels eines (nicht dargestellten) Antriebs von einer Öffnungsstellung in eine Schließstellung gebracht werden kann, wobei eine Öffnungsstellung abgebildet ist. Die zumindest abschnittsweise zylindrisch ausgebildete Verschlussnadel 50 weist endseitig einen Verschlußteil 70 auf, der in Schließstellung durch einen Endabschnitt 84 des Düsenkörpers 20 hindurch in einen zylindrischen Dichtsitz D eingreift. Dieser ist im Ausführungsbeispiel der Fig. 1 vor einer Angußöffnung 51 eingebracht und in seinem oberen Bereich konisch ausgebildet, damit der Verschlußteil 70 - unterstützt von der sich dort ansammelnden Schmelze - reibungsarm in den Dichtsitz D einfahren kann.

Das Verfahren zum Betrieb einer Nadelverschlussdüse in einer Spritzgießvorrichtung kann in Schritt S01 starten, wonach zumindest ein Prozessparameter für die Nadelverschlussdüse vorgegeben wird, ausgewählt aus der Gruppe umfassend: Nadelhubgeschwindigkeit und Nadelhubbeschleunigung. Der Wert des Prozessparameters kann frei wählbar sein oder auf Erfahrungswerten beruhen. Es kann ein solcher Wert gewählt werden, welcher eine möglichst qualitätssichernde Formkavitätsfüllmenge realisiert, um die Anzahl der Iterationen möglichst gering zu halten.

Anschließend wird gemäß S02 die Verschlussnadel 50 aus ihrer Schließstellung in ihre Öffnungsstellung entsprechend des mindestens einen Prozessparameters mit einer vor der Verstellung definierten kontinuierlichen Nadelhubgeschwindigkeit verstellt.

In S03 wird sodann eine definierte Menge an fluider Masse in die Formkavität eingespritzt. Dies erfolgt in Korrespondenz mit dem mindestens einen Prozessparameter.

Nach einer Einspritzdauer wird darauffolgend in S04 die Verschlussnadel 50 aus ihrer Öffnungsstellung in ihre Schließstellung entsprechend des Prozessparameters mit einer kontinuierlichen Nadelhubgeschwindigkeit verstellt.

Anschließend erfolgt die Evaluation des gegossenen Produktes und der Füllmenge in S05. Als Produkt gilt der in einem Spritzgussvorgang hergestellte Gegenstand. Daher produziert sowohl eine Einfach- wie auch eine Mehrfachkavität in einem Spritzgussvorgang ein Produkt. Eine Bewertung des Produkts kann auch abschnittsweise erfolgen. Hierzu wird das in der Formkavität ausgeformte Produkte und/oder zumindest ein während des Einspritzens erfasster Prozessparameter mit zumindest einem vordefinierten Qualitätskriterium verglichen, um zu ermitteln, ob die Formkavitätsfüllmenge zu groß, zu gering oder geeignet war. Sofern das Produkt ein oder mehrere Qualitätskriterien erfüllt, gilt die eingespritzte Menge als geeignet und das Verfahren kann beendet werden, wie S06 zeigt.

Sofern die Begutachtung des Produktes zeigt, dass die Formkavitätsfüllmenge eingangs zu groß gewählt wurde, erfolgt in S07 durch Veränderung eines oder mehrerer Prozessparameter eine Reduktion der Formkavitätsfüllmenge für die anschließende Iteration. Die Prozessparameter können in diesem Fall wie folgt geändert werden:
- Erhöhen der Nadelhubgeschwindigkeit für eine anschließende Iteration für das Verstellen der Verschlussnadel aus ihrer Schließstellung in ihre Öffnungsstellung und/oder für das Verstellen der Verschlussnadel aus ihrer Öffnungsstellung in ihre Schließstellung, und/oder
- Reduzieren einer Nadelhubbeschleunigung für eine anschließende Iteration.
Dieser zumindest eine wertveränderte Prozessparameter wird als neuer vorgegebener Prozessparameter festgelegt und das Verfahren wird ab Schritt S01 in der oben beschriebenen Reihenfolge erneut durchgeführt, um sich der geeigneten Formkavitätsfüllmenge anzunähern und zu erreichen.

Ergibt sich, dass die eingespritzten Formkavitätsfüllmenge eingangs zu gering gewählt wurde, erfolgt in S08 eine Veränderung eines oder mehrerer Prozessparameter dahingehen, dass eine Erhöhung der Formkavitätsfüllmenge für die anschließende Iteration erreicht werden soll. Die Prozessparameter können in diesem Fall wie folgt geändert werden:
- Reduzieren der Nadelhubgeschwindigkeit für eine anschließende Iteration für das Verstellen der Verschlussnadel aus ihrer Schließstellung in ihre Öffnungsstellung und/oder für das Verstellen der Verschlussnadel aus ihrer Öffnungsstellung in ihre Schließstellung, und/oder
- Erhöhen einer Nadelhubbeschleunigung für eine anschließende Iteration.
Dieser zumindest eine wertveränderte Prozessparameter wird als neuer vorgegebener Prozessparameter festgelegt und das Verfahren wird ab Schritt S01 in der oben beschriebenen Reihenfolge erneut durchgeführt, um sich der geeigneten Formkavitätsfüllmenge anzunähern und zu erreichen.

Diese Verfahrensschritte werden in iterativer Weise durchgeführt bis das Vergleichen ergibt, dass das Produkt dem mindestens einen vordefinierten Qualitätskriterium entspricht (S06). Das vordefinierte Qualitätskriterium kann auch ein Wertebereich sein.

Es ist denkbar, dass das Vergleichen ergibt, dass die Füllmenge zu groß oder zu gering war und ein nachfolgendes Vergleichen in der unmittelbar nachfolgenden Iteration das Gegenteil des ersten Vergleiches ergibt, nämlich, dass die Füllmenge zu gering oder zu groß war. Für eine nachfolgende, dritte Iteration, kann dann beispielsweise ein Zwischenwert des Prozesswertes (der Prozesswerte) der ersten und zweiten Iteration für die dritte Iteration gewählt werden.

### Bezugszeichenliste

- 10: Nadelverschlußdüse
- 20: Düsenkörper
- 30: Schmelzekanal
- 40: Austrittsöffnung
- 50: Verschlussnadel
- 51: Angußöffnung
- 70: Verschlussteil
- 84: Endabschnitt

- D: Dichtsitz
- L: Längsachse

## Patentansprüche

1. Verfahren zum Betrieb einer Nadelverschlussdüse in einer Spritzgießvorrichtung, wobei die Spritzgießvorrichtung umfasst:
- eine Nadelverschlussdüse mit zumindest einer Austrittsöffnung,
- zumindest eine Verschlussnadel, welche die Nadelverschlussdüse längsverschieblich entlang eines Hubweges variabler Länge durchsetzt und mittels eines Antriebs ausschließlich zwischen einer Öffnungs- und einer die Austrittsöffnung verschließende Schließstellung verstellbar ist, und
- eine Formkavität, welche fluidisch mit der Nadelverschlussdüse verbunden ist,
umfassend die folgenden Schritte:
a. Vorgeben zumindest eines Prozessparameters für die Nadelverschlussdüse, ausgewählt aus der Gruppe umfassend Nadelhubgeschwindigkeit und Nadelhubbeschleunigung;
b. Verstellen der Verschlussnadel aus ihrer Schließstellung in ihre Öffnungsstellung entsprechend des mindestens einen Prozessparameters mit einer vor der Verstellung definierten kontinuierlichen Nadelhubgeschwindigkeit;
c. Einspritzen einer Menge an fluider Masse in die Formkavität;
d. Verstellen der Verschlussnadel aus ihrer Öffnungsstellung in ihre Schließstellung entsprechend des Prozessparameters mit einer kontinuierlichen Nadelhubgeschwindigkeit;
e. Vergleichen des in der Formkavität ausgeformten Produktes und/oder von zumindest einem während des Einspritzens erfassten Prozessparameters mit zumindest einem vordefinierten Qualitätskriterium, um zu ermitteln, ob die Formkavitätsfüllmenge zu groß oder zu gering war,
f. im Fall einer zu großen eingespritzten Formkavitätsfüllmenge:
i. Erhöhen der Nadelhubgeschwindigkeit für eine anschließende Iteration für das Verstellen der Verschlussnadel aus ihrer Schließstellung in ihre Öffnungsstellung und/oder für das Verstellen der Verschlussnadel aus ihrer Öffnungsstellung in ihre Schließstellung, und/oder
ii. Reduzieren einer Nadelhubbeschleunigung für eine anschließende Iteration, und
iii. Festlegen des zumindest einen wertveränderten Prozessparameters als neuer vorgegebener Prozessparameter,
g. im Fall einer zu geringen eingespritzten Formkavitätsfüllmenge
i. Reduzieren der Nadelhubgeschwindigkeit für eine anschließende Iteration für das Verstellen der Verschlussnadel aus ihrer Schließstellung in ihre Öffnungsstellung und/oder für das Verstellen der Verschlussnadel aus ihrer Öffnungsstellung in ihre Schließstellung, und/oder
ii. Erhöhen einer Nadelhubbeschleunigung für eine anschließende Iteration, und
iii. Festlegen des zumindest einen wertveränderten Prozessparameters als neuer vorgegebener Prozessparameter,
h. Durchführen der Schritte a bis e und f oder g in iterativer Weise bis das Vergleichen ergibt, dass das Produkt dem vordefinierten Qualitätskriterium entspricht.

2. Verfahren nach Anspruch 1, **dadurch gekennzeichnet, dass** unmittelbar nach dem Verstellen der Verschlussnadel in ihre Schließstellung als Messwert ein Formkavitätsinnendruck und/oder eine Formkavitätswandtemperatur und/oder ein optisches oder mechanisches Qualitätsmerkmal erfasst wird.

3. Verfahren nach Anspruch 2, **dadurch gekennzeichnet, dass** der erfasste Messwert in einer Datenbank gespeichert wird.

4. Verfahren nach einem der vorangehenden Ansprüche, **dadurch gekennzeichnet, dass** die Prozessparameter in einer Datenbank gespeichert werden, falls das Produkt dem vordefinierten Qualitätskriterium entspricht.

5. Verfahren nach einem der vorangehenden Ansprüche, wobei die Spritzgießvorrichtung zumindest eine Formkavität umfasst und jeder Formkavität zumindest eine separate Nadelverschlussdüse zugeordnet ist, **dadurch gekennzeichnet, dass** die Prozessparameter für jede Nadelverschlussdüse separat vorgegeben und festgelegt werden.

6. Verfahren nach einem der vorangehenden Ansprüche, **dadurch gekennzeichnet, dass** die Verstellung der Verschlussnadel mittels eines als Antrieb dienenden Schrittmotors oder Servomotors erfolgt, welcher vorzugsweise einen Encoder umfasst, und/oder vorzugsweise ein Positionsabfragemittel aufweist, und/oder vorzugsweise pneumatisch, hydraulisch oder elektrisch betreibbar ist.

7. Verfahren nach einem der vorangehenden Ansprüche, **dadurch gekennzeichnet, dass** eine Echtzeitposition der Verschlussnadel nicht von einer Sensorik erfasst wird.

8. Verfahren nach einem der vorangehenden Ansprüche, **dadurch gekennzeichnet, dass** die Verschlussnadel zwischen ihrer Öffnungs- und ihrer Schließstellung nicht in dazwischenliegende Zwischenstellungen verfahren wird.

## Claims

1. Method of operating a needle valve nozzle in an injection moulding apparatus, the injection moulding apparatus comprising:
- a needle valve nozzle having at least one outlet opening,
- at least one shut-off needle which passes through the needle valve nozzle in a longitudinally displaceable manner along a stroke path of variable length and which is adjustable by a drive exclusively between an opening position and a closing position closing the outlet opening, and
- a mould cavity, which is fluidically connected to the needle valve nozzle,
comprising the following steps:
a. Presetting at least one process parameter for the needle valve nozzle selected from the group comprising needle stroke speed and needle stroke acceleration;
b. Adjusting the shut-off needle from its closed position to its open position according to the at least one process parameter with a continuous needle stroke speed defined before the adjustment;
c. Injecting a quantity of fluid mass into the mould cavity;
d. Moving the shut-off needle from its open position to its closed position according to the process parameter with a continuous needle stroke speed;
e. Comparing the product formed in the mould cavity and/or at least one process parameter detected during injection with at least one predefined quality criterion to determine whether the mould cavity filling quantity was too large or too small,
f. in the case of an injected mould cavity filling quantity that is too large:
i. Increasing the needle stroke speed for a subsequent iteration for moving the shut-off needle from its closed position to its open position and/or for moving the shut-off needle from its open position to its closed position, and/or
ii. reducing a needle stroke acceleration for a subsequent iteration, and
iii. Setting the at least one changed value process parameter as a new predetermined process parameter,
g. in the case of an insufficient injected mould cavity filling quantity
i. Reducing the needle stroke speed for a subsequent iteration for moving the shut-off needle from its closed position to its open position and/or for moving the shut-off needle from its open position to its closed position, and/or
ii. increasing a needle stroke acceleration for a subsequent iteration, and
iii. Setting the at least one value changed process parameter as a new predetermined process parameter,
h. Performing steps a to e and for g in an iterative manner until the comparison shows that the product meets the predefined quality criterion.

2. Method according to claim 1, **characterised in that** immediately after the shut-off needle has been moved into its closed position, an internal mould cavity pressure and/or a mould cavity wall temperature and/or an optical or mechanical quality characteristic is recorded as a measured value.

3. Method according to claim 2, **characterised in that** the recorded measured value is stored in a database.

4. Method according to one of the preceding claims, **characterized in that** the process parameters are stored in a database if the product meets the predefined quality criterion.

5. Method according to any one of the preceding claims, wherein the injection moulding apparatus comprises at least one mould cavity and at least one separate needle valve nozzle is associated with each mould cavity, **characterized in that** the process parameters for each needle valve nozzle are predefined and determined separately.

6. Method according to one of the preceding claims, **characterised in that** the adjustment of the shut-off needle is effected by a stepper motor or servomotor serving as a drive, which preferably comprises an encoder, and/or preferably has a position sensing means, and/or is operable preferably pneumatically, hydraulically or electrically.

7. Method according to any one of the preceding claims, **characterised in that** a real-time position of the shut-off needle is not detected by a sensor system.

8. Method according to one of the preceding claims, **characterised in that** the shut-off needle is not moved into intermediate positions between its opening and its closing position.

## Revendications

1. Procédé de fonctionnement d'une buse à obturation par aiguille dans un dispositif de moulage par injection, le dispositif de moulage par injection comprenant :
- une buse à obturateur à aiguille avec au moins une ouverture de sortie,
- au moins une aiguille d'obturation qui traverse la buse d'obturation à aiguille en se déplaçant longitudinalement le long d'une course de longueur variable et qui peut être déplacée au moyen d'un entraînement exclusivement entre une position d'ouverture et une position de fermeture fermant l'ouverture de sortie, et
- une cavité de moulage qui est reliée de manière fluide à la buse d'obturation d'aiguille,
comprenant les étapes suivantes :
a. Définition d'au moins un paramètre de processus pour la buse d'obturation d'aiguille, choisi dans le groupe comprenant la vitesse de la course de l'aiguille et l'accélération de la course de l'aiguille ;
b. Déplacement de l'aiguille d'obturation de sa position de fermeture à sa position d'ouverture en fonction d'au moins un paramètre de processus avec une vitesse de course d'aiguille continue définie avant le déplacement ;
c. Injection d'une quantité de masse fluide dans la cavité du moule ;
d. Déplacement de l'aiguille d'obturation de sa position d'ouverture à sa position de fermeture en fonction du paramètre de processus avec une vitesse de course continue de l'aiguille ;
e. Comparaison du produit formé dans la cavité de moulage et/ou d'au moins un paramètre de processus détecté pendant l'injection avec au moins un critère de qualité prédéfini afin de déterminer si la quantité de remplissage de la cavité de moulage était trop importante ou trop faible,
f. dans le cas d'une quantité de remplissage de la cavité injectée trop importante :
i. Augmenter la vitesse de course de l'aiguille pour une itération suivante pour le déplacement de l'aiguille d'obturation de sa position de fermeture à sa position d'ouverture et/ou pour le déplacement de l'aiguille d'obturation de sa position d'ouverture à sa position de fermeture, et/ou
ii. Réduire l'accélération de la course de l'aiguille pour une itération suivante, et
iii. Définir l'au moins un paramètre de processus dont la valeur a été modifiée comme nouveau paramètre de processus prédéfini,
g. dans le cas d'une quantité de remplissage de la cavité injectée trop faible
i. Réduire la vitesse de course de l'aiguille pour une itération suivante pour le déplacement de l'aiguille d'obturation de sa position de fermeture à sa position d'ouverture et/ou pour le déplacement de l'aiguille d'obturation de sa position d'ouverture à sa position de fermeture, et/ou
ii. Augmenter l'accélération de la course de l'aiguille pour une itération suivante, et
iii. Définir l'au moins un paramètre de processus dont la valeur a été modifiée comme nouveau paramètre de processus prédéfini,
h. Exécution des étapes a à e et f ou g de manière itérative jusqu'à ce que la comparaison indique que le produit correspond au critère de qualité prédéfini.

2. Procédé selon la revendication 1, **caractérisé en ce que**, immédiatement après le déplacement de l'aiguille d'obturation dans sa position de fermeture, on enregistre comme valeur de mesure une pression interne de la cavité et/ou une température de la paroi de la cavité et/ou un critère de qualité optique ou mécanique.

3. Procédé selon la revendication 2, **caractérisé en ce que** la valeur de mesure saisie est enregistrée dans une base de données.

4. Procédé selon l'une des revendications précédentes, **caractérisé en ce que** les paramètres du procédé sont enregistrés dans une base de données si le produit est conforme au critère de qualité prédéfini.

5. Procédé selon l'une des revendications précédentes, dans lequel le dispositif de moulage par injection comprend au moins une cavité de moule et au moins une buse d'obturation à aiguille séparée est associée à chaque cavité de moule, **caractérisé en ce que** les paramètres de processus sont prédéfinis et définis séparément pour chaque buse d'obturation à aiguille.

6. Procédé selon l'une des revendications précédentes, **caractérisé en ce que** le réglage de l'aiguille d'obturation s'effectue au moyen d'un moteur pas à pas ou d'un servomoteur servant d'entraînement, qui comprend de préférence un codeur, et/ou présente de préférence un moyen de détection de position, et/ou peut être actionné de préférence de manière pneumatique, hydraulique ou électrique.

7. Procédé selon l'une quelconque des revendications précédentes, **caractérisé en ce qu'**une position en temps réel de l'aiguille d'obturation n'est pas détectée par un système de détection.

8. Procédé selon l'une des revendications précédentes, **caractérisé en ce que** l'aiguille d'obturation n'est pas déplacée dans des positions intermédiaires entre sa position d'ouverture et sa position de fermeture.
